# EUROPEAN PATENT APPLICATION

(11) **EP 3 587 238 A1**
(43) Date of publication of application: **01.01.2020**
(21) Application number: 18180684.5
(22) Date of filing: 29.06.2018
(51) Int. Cl.: B63B 21/50, B63B 35/44

(54) **TENSION LEG PLATFORM**

(71) Applicant: MHI Vestas Offshore Wind A/S, 8200 Aarhus N (DK)
(72) Inventor: Botwright, Adrian, 8471 Sabro (DK)
(74) Representative: Vestas Patents Department

(57) **Abstract**

A tension leg platform having a buoyant platform, at least one tether attached to the buoyant platform and at least one foundation pile attached to the at least one tether. The buoyant platform is configured to pay out the at least one tether so as to lower the at least one foundation pile from a first position to a second position in which the at least one foundation pile can be installed into the floor of a body of water. Once the at least one foundation pile is installed, the at least one tether is locked off to provide the respective tension legs of the tension leg platform.

## Description

### FIELD OF THE INVENTION

The present invention relates to a tension leg platform, a wind turbine attached to a tension leg platform, and a method for installing a tension leg platform.

### BACKGROUND OF THE INVENTION

Off-shore wind turbines tend to be favoured as they are typically able to access higher wind speeds and a more steady supply of wind compared to on-shore wind turbines, which enables off-shore wind turbines to yield a larger amount of energy.

However, fixed off-shore wind turbine assemblies, such as monopile or jacket structures, can be difficult to secure and are generally only suited for use at shallower depths. This limits access to many desirable wind resources.

One method of overcoming these limitations is by using a floating support structure, such as a catenary moored platform, and mounting a wind turbine to the floating platform. This enables wind turbines to be installed in deeper waters. However, catenary moored platforms require large mooring line angles and long mooring lines, in order to adequately moor the platform. As well as occupying large amounts of space, catenary moored platforms experience large amounts of horizontal and vertical motion which places significant amounts of stress, particularly fatigue stress, on the platform and the components mounted to it, such as (flexible) electrical cables.

Tension leg platforms are another variety of floating support structure which are used extensively in the oil and gas industry. Tension leg platforms have the advantage of reducing vertical motions, and therefore stresses experienced by the platform and components mounted to it. However, tension leg platforms tend to be difficult and expensive to install as they often require highly specialised equipment, such as jack-up or lifting vessels, and take a long time to install which increases the cost of installation.

### SUMMARY OF THE INVENTION

A first aspect of the invention provides a tension leg platform comprising a buoyant platform, at least one tether attached to the buoyant platform, at least one foundation pile attached to the at least one tether and at least one locking device configured to lock off the at least one tether with respect to the buoyant platform, wherein the buoyant platform is configured to cause paying out of the at least one tether so as to lower the at least one foundation pile attached thereto from a first position proximal to the buoyant platform to a second position in which the at least one foundation pile can be installed into the floor of a body of water.

A second aspect of the invention provides a method of installing a tension leg platform comprising the steps of providing a buoyant platform having at least one tether attached to the buoyant platform, and at least one foundation pile attached to the at least one tether, paying out the at least one tether from the buoyant platform so as to lower the at least one foundation pile from a first position proximal to the buoyant platform to a second position adjacent to the floor of a body of water, installing the at least one foundation pile into the floor of the body of water and locking off the at least one tether with respect to the buoyant platform to provide a tension leg of the tension leg platform.

The invention is advantageous in that foundation pile is attached to the floating platform before the foundation pile is installed into the floor of the body of water, so the whole tension leg platform (including the pile) can be moved and removed.

The term 'foundation pile' is used herein to refer to a piling structure which is driven substantially vertically into a surface and resists substantially vertical (axial) and lateral loads. Furthermore, piling structures are secured against the surface into which they are driven and as such piling structures secure a vertical load by acting against the surface into which they are driven. The term "pile" is well known in the art and is distinct from other mooring devices such as a dragging anchor which are driven substantially horizontally into a surface or gravity anchors, which do not secure vertical loads by acting against a surface.

The term "tension leg platform" is used herein to refer to a vertically moored floating structure, the structure being vertically moored by at least one tether or tendon having high axial stiffness such that almost all vertical motion of the platform is eliminated. The term "tension leg platform" is well known in the art and is distinct from other moored structures such as catenary moored structures, which do not exhibit a sufficiently high axial stiffness to be considered a 'tension leg arrangement.

The at least one foundation pile may be a suction pile. Alternatively, the at least one foundation pile may be a driven pile. A suction pile (or suction caisson, suction anchor, or suction bucket) has an upturned bucket or skirt that can be embedded into sediment of the floor of the body of water by creating a negative pressure inside the pile skirt. The pile can be removed by applying positive pressure inside the pile skirt.

The at least one foundation pile may be a plurality of foundation piles. The plurality of foundation piles may be a connected cluster of piles.

The at least one tether may be a plurality of tethers.

The tension leg platform may comprise a connector configured to connect the plurality of tethers and the at least one foundation pile may be attached to the plurality of tethers via the connector.

The buoyant platform may comprise a plurality of buoyant chambers. The buoyant chambers may be joined by a mechanical connection and/or by a fluid connection. The buoyant platform may have a variable buoyancy.

The locking device may be a securable winch, a clamp or any other suitable locking means.

The tension leg platform may comprise a cable installation for connection to an electrical power cable. The cable installation may be arranged such that the electrical power cable is a free hanging catenary. The cable installation may be a cable riser.

The buoyant platform may have at least one winch associated with the at least one tether, wherein winding of the winch causes the paying out, and reeling in, of the at least one tether. The winch may be a motor driven winch comprising a winch actuator. Alternatively, the winch may be manually actuated. Alternatively, the buoyant platform may be configured to pay out the at least one tether via any other suitable means.

The buoyant platform may be further configured to adjust the length of the at least one tether between the buoyant platform and the at least one foundation pile. The buoyant platform may be further configured to adjust the length of the at least one tether between the buoyant platform and the at least one foundation pile using the at least one winch.

The tension leg platform may comprising a suction pump configured to be raised and lowered from the buoyant platform and for coupling to a suction pile.

The tension leg platform may be configured to be towed across the body of water by a propelling vessel. The propelling vessel may be a tug.

The tension leg platform may be suitable for supporting a wind turbine.

The tension leg platform may be attached to a wind turbine.

The method of installing a tension leg platform may comprise decreasing the buoyancy of the buoyant platform to a first pre-determined level corresponding to a desired height of the buoyant platform in the body of water, locking off the at least one tether, and increasing the buoyancy of the buoyant platform to a second pre-determined level corresponding to a desired tension in the at least one tether.

The method of installing a tension leg platform, wherein the at least one foundation pile is a suction pile, may comprise lowering a suction pump from the buoyant platform to couple with the suction pile, actuating the suction pump to embed the suction pile into the floor of the body of water, decoupling the suction pump from the suction pile and recovering the suction pump to the buoyant platform.

The method of installing a tension leg platform may comprise towing the tension leg platform across the body of water to an installation site using a propelling vessel.

The method of installing a tension leg platform may comprise installing a wind turbine onto the tension leg platform prior to towing the tension leg platform to the installation site. Alternatively, the method of installing a tension leg platform may comprise installing a wind turbine onto the tension leg platform after towing the tension leg platform to the installation site.

The method of installing a tension leg platform may comprise inspecting the tension leg platform. The step of inspecting the tension leg platform may comprise using a remotely operated vehicle (ROV) to inspect the tension leg platform.

A third aspect of the invention provides a connector for a tension leg platform including a buoyant platform, a plurality of tethers attachable to the buoyant platform, and at least one foundation pile, the connector comprising a first side attachable to the plurality of tethers of the tension leg platform, and a second side comprising an attachment device for attachment to at least one foundation pile of the tension leg platform.

A fourth aspect of the invention provides a method of installing a tension leg platform comprising the steps of providing a buoyant platform having a plurality of tethers attached to the buoyant platform and a connector comprising a first side attached to the plurality of tethers of the tension leg platform, and a second side comprising an attachment device for attachment to at least one foundation pile of the tension leg platform, the method comprising the steps of lowering at least one foundation pile to the floor of a body of water, installing the at least one foundation pile into the floor, paying out the plurality of tethers from the buoyant platform so as to lower the connector from a first position proximal to the buoyant platform to a second position adjacent to the floor of the body of water, attaching the connector to the at least one foundation pile and locking off the at least one tether with respect to the buoyant platform to provide a tension leg of the tension leg platform.

The method may comprise attaching the connector to the at least one foundation pile using an ROV.

The method may comprise providing a surface line extending from the at least one foundation pile to a surface of the body of water, providing a connector having a guide device, and attaching the guide device to the surface line prior to lowering the connector such that connector remains aligned with the at least one foundation pile as it is lowered from the first position to the second position.

### BRIEF DESCRIPTION OF THE DRAWINGS

Embodiments of the invention will now be described with reference to the accompanying drawings, in which:
Figure 1 illustrates a tension leg platform having a wind turbine mounted thereto;
Figure 2 illustrates a schematic view of a platform of a tension leg platform according to one example;
Figure 2A illustrates a side view of a platform of a tension leg platform according to an alternative example;
Figure 2B illustrates a side view of a platform of a tension leg platform according to another alternative example;
Figure 2C illustrates a side view of a platform of a tension leg platform according to yet another alternative example;
Figure 3 illustrates a schematic view of a connector and a plurality of tethers of a tension leg platform according to the example illustrated in Figures 1 and 2;
Figure 4 illustrates a plan view of a plurality of foundation piles of a tension leg platform according to the example illustrated in Figures 1, 2 and 3;
Figure 4A illustrates a plan view of a foundation pile according to an alternative example;
Figure 4B illustrates a plan view of a cluster of foundation piles according to another alternative example;
Figures 5A-D illustrate a method of assembling a tension leg platform according to the examples illustrated in Figures 1 to 4 prior to installation into an off-shore location;
Figures 6A-E illustrate a method of installing a tension leg platform according to the examples illustrated in Figures 1 to 5.
Figures 7A-B illustrate a method of installing an electrical power cable onto a tension leg platform according to the examples illustrated in Figures 1 to 6, and
Figures 8A-D illustrate an alternative method of installing a tension leg platform comprising a connector.

### DETAILED DESCRIPTION OF EMBODIMENT(S)

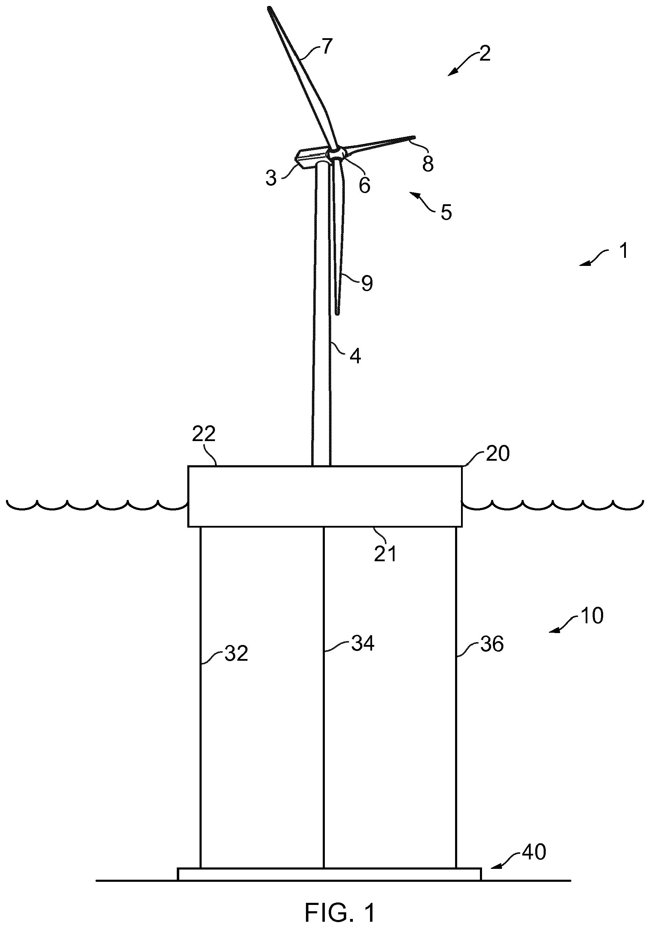

Figure 1 shows an offshore installation 1 utilising an example of a tension leg platform according to the present invention. The offshore installation 1 comprises a wind turbine 2 including a nacelle 3 supported on a tower 4. The nacelle 3 supports a rotor 5 comprising a hub 6 to which three blades 7, 8, 9 are attached. It will be noted that the wind turbine 2 is the common type of horizontal axis wind turbine (HAWT) such that the rotor 5 is mounted at the nacelle 3 to rotate about a substantially horizontal axis defined at the centre at the hub 6. As is known, the blades 7, 8, 9 are acted on by the wind which causes the rotor 5 to rotate about its axis thereby operating generating equipment through a gearbox (not shown) that is housed in the nacelle 3. The generating equipment is not shown in figure 1 since it is not central to the examples of the invention.

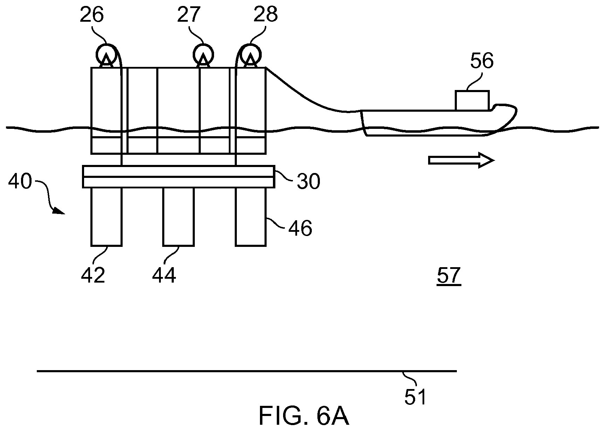

The tower 4 is mounted on a foundation provided by a tension leg platform 10 comprising a buoyant marine platform, hereinafter referred to as a platform 20, attached to a foundation 40, made up of a plurality of foundation piles 42, 44, 46, see Figure 6A to B, by tethers 32, 34, 36 which form the tension legs of the tension leg platform 10.

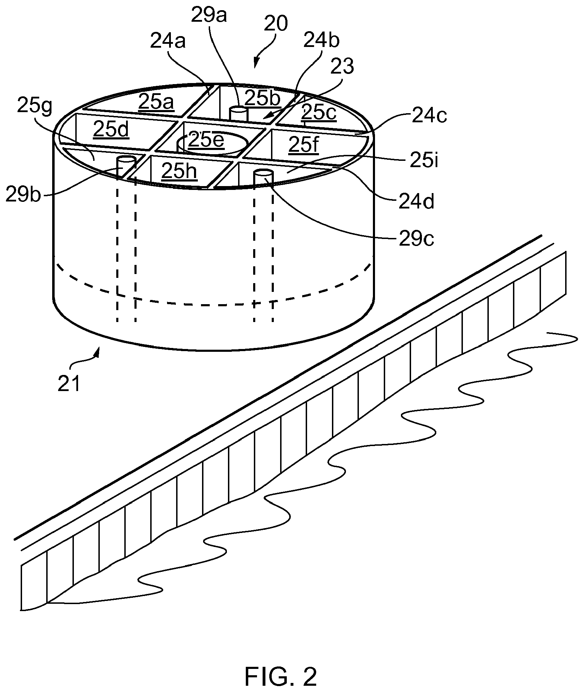

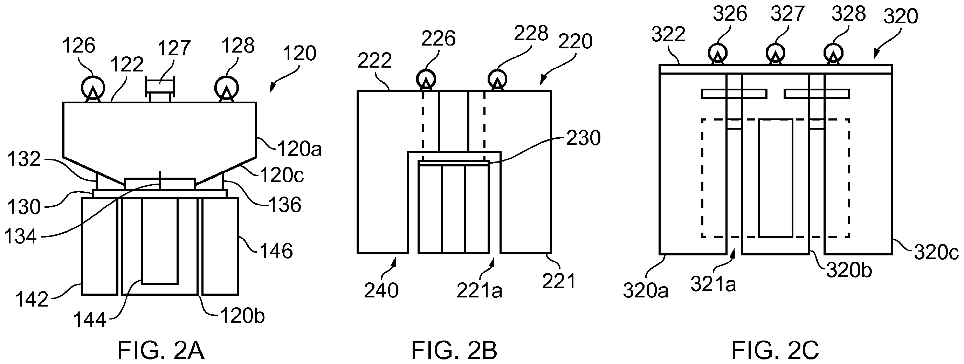

The platform 20 is shown in greater detail in Figure 2. In this example, the platform 20 has a substantially cylindrical shape and comprises a base 21, an upper surface 22 (not shown in Figure 2) to which the wind turbine 2 is mounted, and a hollow section 23 defined therebetween. The hollow section 23 comprises a plurality of bulkheads 24a-d which divide the hollow section 23 of the platform 20 into a variety of connected, buoyant chambers 25a-i, with each bulkhead 24a-d comprising a plurality of holes such that each buoyant chamber 25a-i is placed in fluid communication with its adjacent neighbours. This enables any fluid within the hollow section 23 to be evenly distributed throughout the platform 20.

The platform further comprises a plurality of inlets 29a-c and outlets (not shown), placed in direct fluid communication with buoyant chambers 25b, 25g and 25i for receiving and jettisoning fluid, typically water, to and from the buoyant chambers 25a-i. This provision enables the platform 20 to exhibit a variable buoyancy dependent upon the amounts of water ballast contained within the buoyant chambers 25a-i of the hollow section 23. Alternatively, each of the buoyant chambers 25a-I may instead comprise a respective inlet and/or outlet, or in yet a further alternative the platform 20 may comprise a single inlet and/or outlet. Furthermore, the bulkheads, inlet(s) and outlet(s) may be omitted in which case the platform will exhibit a fixed, or constant, buoyancy.

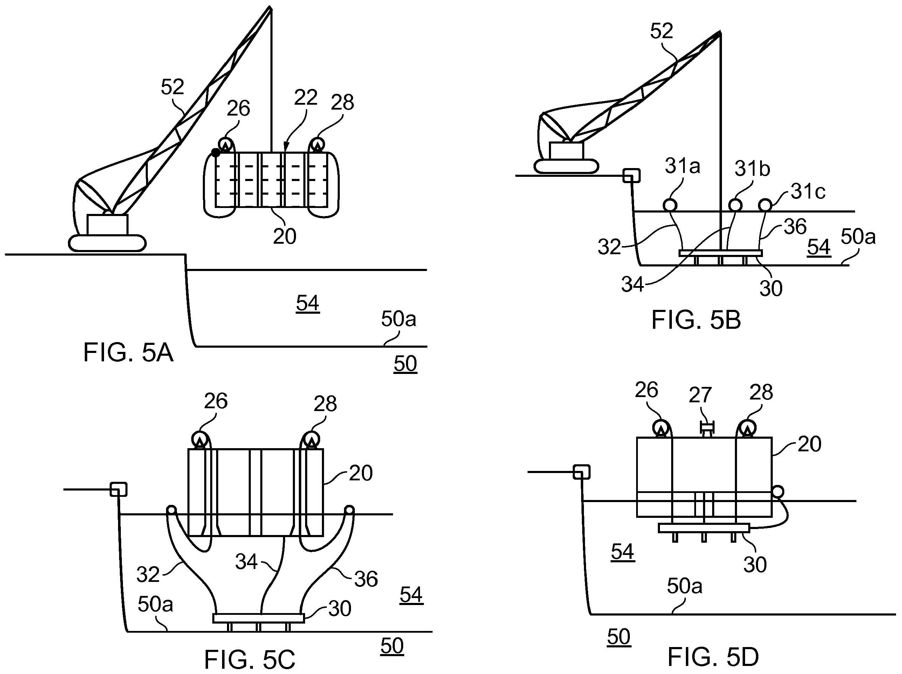

A plurality of winches 26, 27, 28, see Figure 5 to 6 are mounted annularly around an outer edge of the upper surface 22 of the platform 20, each winch 26, 27, 28 being associated with a respective tether 32, 34, 36 for attaching the respective tether 32, 34, 36 to the platform 20. The plurality of winches 26, 27, 28 each comprise a winch actuator (not shown) configured to rotate the respective winches 26, 27, 28 in either a clockwise or anti-clockwise direction to reel in or pay out the tethers 32, 34, 36. However, it shall be appreciated by the skilled person that any other suitable pay out or reeling means may be used.

A number of alternative platforms are shown in Figures 2A-2C. Like reference numerals denote like parts with Figure 2, and only the differences will be described here.

In Figure 2A, the platform 120 is a funnel shaped buoyant platform having a first cylindrical portion 120a, exhibiting a substantially similar geometry to that of platform 20 depicted in Figure 2, a second cylindrical portion 120b extending downwardly from the first cylindrical portion 120a and a tapered transition portion 120c between the first and second cylindrical portions 120a, b. The second cylindrical portion 120b exhibits a greater length and reduced radius when compared to the first cylindrical portion 120a. This may enable the platform 120 to exhibit improved levels of stability.

Alternatively, in Figure 2B, the base 221 of the platform 220 comprises a central recess 221a when viewed in cross section, with the platform 220 being disposed annularly around the central recess 221a. The winches 226, 227, 228 of Figure 2B are disposed centrally at the upper surface 222 of the platform 220 proximate to the central recess 221a such that the plurality of tethers (not shown in Figure 2B) can be paid out centrally through the central recess 221a of the platform 220. Figure 2C depicts a similar platform to that of Figure 2B, however the platform 320 of Figure 2C is formed as a series of elongate fingers 320a-c disposed annularly about a central recess 321a.

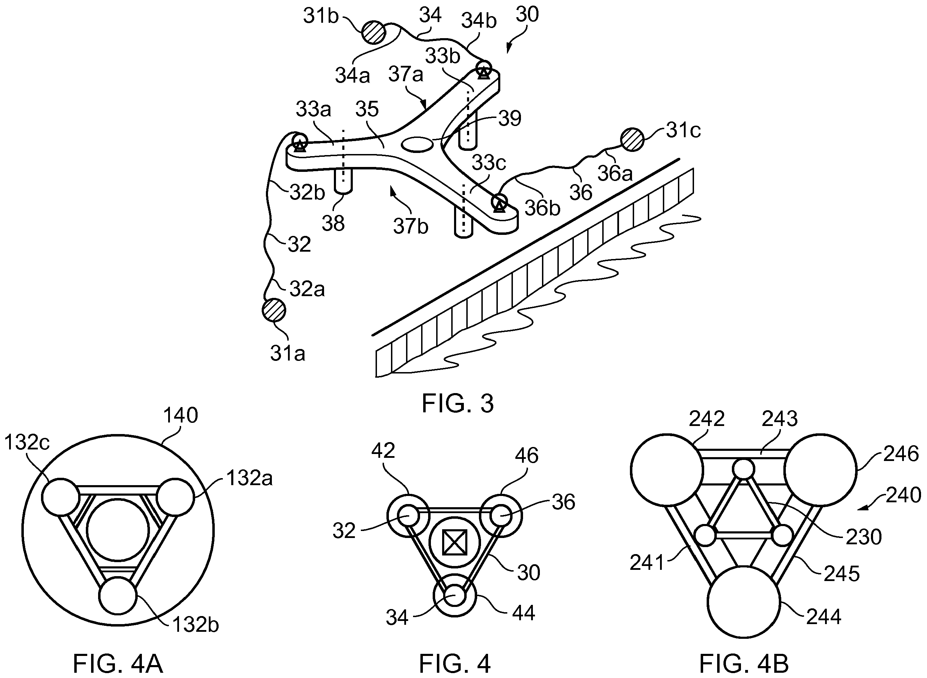

The plurality of tethers 32, 34, 36 are shown in greater detail in Figure 3. Each tether has a first end 32a, 34a, 36a, having a respective floatation device 31a-c removably connected thereto, and a second end 32b, 34b, 36b for attachment to a connector 30. In the example shown in Figure 3, the tension leg platform 10 comprises three tethers 32, 34, 36. However, it shall be appreciated that the tension leg platform 10 may alternatively comprise two tethers, more than three tethers or, in a further alternative, may comprise a single tether. Similarly, the tension leg platform 10 may alternatively comprise two winches, more than three winches, or a single winch depending on the number of tethers being used.

The connector 30, shown in Figure 3, is a tri-pod connector having three spokes 33a, 33b, 33c extending outwardly from a central portion 35, although it shall be appreciated that in other examples the connector may be any suitable shape. The connector 30 has a first side 37a for attachment to the second ends 32b, 34b, 36b of the respective tethers 32, 34, 36 and a second side 37b having an attachment device 38 for attachment to the foundation piles 42, 44, 46 of the tension leg platform 10, with each tether 32, 34, 36 being attached to a respective spoke 33a-c of the connector 30.

In the example illustrated in Figure 3, the attachment device 38 comprises a plurality of projections for coupling with respective recesses located on the foundation piles 42, 44, 46. The projections may extend downwardly. However, in an alternative example, the connector 30 may comprise any number of projections and, in a further alternative, may comprise any other suitable attachment device. Furthermore, whilst the connector 30 of Figure 3 is described as forming direct connections with the foundation pile 42, 44, 46, it shall be appreciated that in another example, the connector 30 may form an indirect connection with the foundation piles 42, 44, 46 via an intermediate connector, or in yet another alternative, the connector 30 may be omitted such that each tether 32, 34, 36 is directly secured to a respective foundation pile 42, 44, 46.

The central portion 35 of the connector 30 may also comprise a hole 39 extending through the connector 30. The connector may have a hole sized to receive part of the buoyant platform. In the example shown in Figure 2A, this hole is configured to be large enough to enable the second cylindrical portion 120b of the platform to extend through the hole 39 to enable the foundation piles 142, 144, 146 to be carried around the second cylindrical portion 120b, thereby reducing the height of the tension leg platform prior to installation. However, in other examples, the hole 39 may be omitted.

An example of the connection formed between the connector 30 and the foundation piles 42, 44, 46 is shown in Figure 4.

In the example illustrated in Figure 4, the foundation piles 42, 44, 46 are a plurality of suction piles with each foundation pile 42, 44, 46 having a holding capacity of 300 metric tonnes (mT). Suction piles are typically preferred in such applications since they can be installed without a piling hammer and therefore help to minimise any disruption to the local marine environment. Suction piles are well known in the art and therefore for the sake of conciseness shall not be described in further detail within this application. Alternatively, however, in another example driven foundation pilings may be used. As has been mentioned previously, each foundation pile 42, 44, 46 has a respective recess for receiving a respective projection of the attachment device 38 from the connector 30 which can then be secured using means which are well known in the art.

A number of alternative connection types are illustrated in Figures 4A and 4B. In Figure 4A, a single foundation pile 140 is shown to which a plurality of tethers 132a, 132b, and 132c are attached.

Meanwhile, Figure 4B illustrates a connected cluster of foundation piles 240 wherein a respective rib 241, 243, 245 extends between adjacent foundation piles 242, 244, 246 thereby connecting each of the foundation piles 242, 244, 246 to form a cluster. In Figure 4B, a first rib 241 extends between foundation piles 242 and 244, a second rib 243 extends between foundation piles 242 and 246 and a third rib 245 extends between foundation piles 244 and 246. Furthermore, each of the respective projections of the attachment device (not shown) of the connector 230 are configured to connect with a respective recess located on the first, second and third ribs 241, 243, 245.

Since each foundation pile 242, 244, 246 of the connected cluster of foundation piles 240 is secured in a desired position relative to the other foundation piles which comprise the cluster, examples featuring a connected cluster of piles do not require pile templates for installation into the floor of a body of water, typically a sea bed, and therefore enable installation times to be further reduced.

It shall also be appreciated that the tension leg platform may comprise a single foundation pile, or alternatively, may comprise a plurality of foundation piles each being connected to a plurality of tethers respectively.

Whilst only the above examples have been illustrated in this application, it shall be appreciated that in other examples the tension leg platform may comprise any of the following combinations: a single tether attached to a single foundation pile; a plurality of tethers attached to a single foundation pile; a single tether connected to a plurality of foundation piles; a single tether connected to a connected cluster of foundation piles; a plurality of tethers and a plurality of foundation piles wherein each tether is to attached to a respective foundation pile; a plurality of tethers and a connected cluster of foundation piles wherein each tether is to attached to a respective foundation pile; a plurality of tethers and a plurality of foundation piles wherein a plurality of tethers is to attached to each foundation pile; a plurality of tethers and a connected cluster of foundation piles wherein a plurality of tethers is attached to each a foundation pile of the foundation pile cluster; a plurality of tethers and a connected cluster of foundation piles wherein a each tether is attached to a respective rib of the foundation pile cluster; and/or a plurality of tethers and a connected cluster of foundation piles wherein a plurality of tethers are attached to each rib of the foundation pile cluster.

A method of fabricating the tension leg platform prior to installation at a specified location shall now be described with reference to Figures 5A-D.

Figures 5A and 5B illustrate respective first and second stages of manufacturing the tension leg platform 10. The platform 20 and connector 30 are lowered into a basin 50, typically in the form of a harbour or dry-dock, via a crane 52. The basin 50 is filled with a fluid 54, typically water, to a depth sufficient for the platform 20 to be floated over connector 30. The buoyancy of the platform 20 is designed to be equal to or greater than the combined weight of the platform 20, the plurality of tethers 32, 34, 36 and foundation piles 42, 44, 46. Therefore, as the platform 20 is lowered into the basin 50, the buoyancy of the platform 20 allows it to float. Conversely, as the connector 30 is lowered into the basin 50, the connector 30 sinks and can therefore be easily placed on the floor 50a of the basin 50 via the crane 52. The hole 39 of the connector 30 also helps to reduce the surface area, and therefore buoyancy, of the connector 30 thereby further facilitating easy placement of the connector 30 onto the floor 50a of the basin.

As the connector 30 is placed on the floor 50a of the basin 50, the floatation devices 31a-c attached to each of the tethers 32, 34, 36 float the first ends 32a, 34a, 36a of the tethers 32, 34, 36 to the surface to allow for easy uptake onto the respective winches 26, 27, 28 of the platform 20. The floatation devices 31a-c also aid the operator in locating the respective first ends 32a, 34a, 36a of the tethers 32, 34, 36 within the basin 50.

As is illustrated in Figure 5C, once the ends of the tethers 32, 34, 36 have been located, the floating devices 31a-c can be removed and the first ends of the tethers 32a, 34a, 36a are fed through to the respective winches 26, 27, 28 ready for uptake. The winches 26, 27, 28 are then wound, as shown in Figure 5D, to suspend the connector 30 from the platform 20.

The tension leg platform 10 can then be connected to the foundation piles 42, 44, 46 via the connector 30. The foundation piles 42, 44, 46 may be attached to the connector 30 prior to, or after, placing the connector 30 into the basin 50 using means which are well known in the art.

Once the tension leg platform 10 has been assembled into its pre-installation configuration, it can be attached to a tug 56, or any other suitable propelling vessel, for towing across a body of water 57 to a desired installation site, as shown in Figure 6A.

Since the tension leg platform 10 can be produced and finished entirely on-shore, no heavy lifting vessels are needed to offload constituent parts of the platform structure into open water area since these are components are already prefabricated on shore and can therefore be towed / floated out to the site using the platform 20 in a single operation. Fast installation times can therefore be achieved and the dependence of costly heavy lifting vessels at the offshore site of installation can be avoided.

The term "on-shore" is used herein to refer to a location situated on or near to the shore or reachable (for example by a crane) from shore. This may include harbors, docklands, dry-docks, rivers or shorelines but will be considered to exclude any deep, open water areas such as locations in the middle of oceans or other comparable open water areas, such as large lakes.

The method of installing the tension leg platform at a desired location shall now be described with reference to Figures 6A-6E.

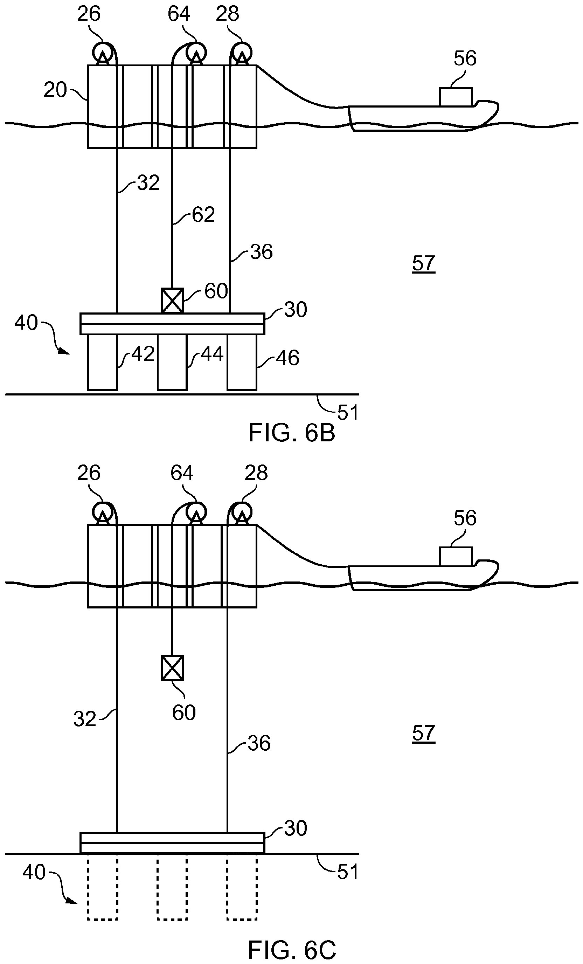

Once the tension leg platform 10 has been towed to the location of a desirable wind resource within the body of water 57, the winches 26, 27, 28 are actuated to pay out each of the tethers 32, 34, 36. The paying out of the tethers 32, 34, 36 has the effect of lowering the connector 30, and the foundation piles 42, 44, 46 attached thereto, from a first position proximal to the buoyant platform 20 to a second position, shown in Figure 6B, in which the foundation piles 42, 44 and 46 can be installed into the floor 51 of the body of water 57.

The provision of a connector helps to ensure that each tether 32, 34, 36 remains aligned when multiple tethers are installed in a single operation. However, it shall also be appreciated that each tether may alternatively be connected directly to the foundation piles 42, 44, 46 without a separate connector, and that each tether and foundation pile may therefore be installed in a series of separate operations.

Once the foundation piles 42, 44, 46 are in the second position, a suction pump 60 is connected to the plurality of foundation piles 42, 44, 46, optionally using a suction pump tether 62 coupled at one end to the suction pump 60 and coupled at its other end to a suction pump winch 64 located on the buoyant platform 20. The suction pump 60 is configured for coupling with foundation piles 42, 44, 46 such that, when coupled, upon actuation of the suction pump 60, a negative pressure is created within the foundation pile to which the suction pump 60 is coupled which acts to embed the foundation pile into the floor 51 of the body of water 57, thereby securing the foundation pile as shown in Figure 6C. Typically, each of the foundation piles 42, 44, 46 are pumped in a series of stages to help ensure that the foundation 40 remains level. However, in an alternative example, a plurality of pumps may be used, each being coupled to a respective foundation pile to install the foundation piles 42, 44, 46 in a single operation. In a further example the pump(s) may be located on the buoyant platform 20 and coupled to the foundation piles via fluid pipes.

Following the initial pumping operation, individual foundation piles may be subjected to further pumping if further levelling off of the foundation 40 is required. Once the pumping operating has been finished, the suction pump 60 is recovered back to the buoyant platform 20 (if the suction pump was lowered to the foundation as part of the connection between the pump and the piles) via actuating the suction pump winch 64. The suction pump can then remain on the buoyant platform 20 or can be recovered by a vessel. Typically, installation of the foundations piles 42, 44, 46 requires 3 hours of pumping time, with a total installation time of 5 hours being achievable from lowering the foundation piles 42, 44, 46 to recovering the suction pump 60.

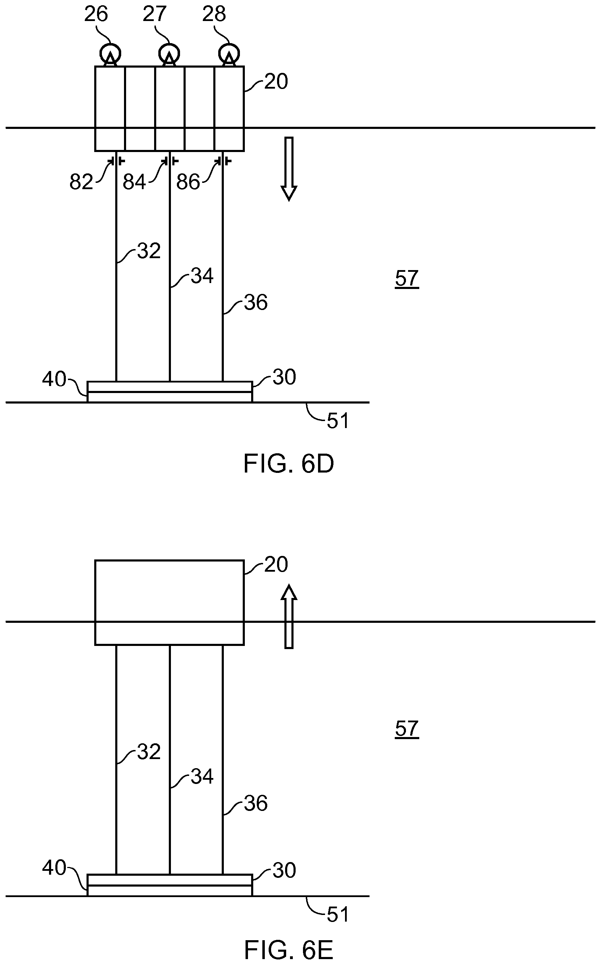

The buoyancy of the platform 20 is then decreased, as illustrated in Figure 6D by allowing the ingress of fluid into the bulkheads 25a-i of the platform 20 via the inlets 29a, 29b, 29c until the added ballast causes the platform 20 to reach a first pre-determined level corresponding to the desired height of the buoyant platform in the body of water 57. Once the desired height has been reached, the tethers 32, 34, 36 are "locked off" to form the respective tension legs of the tension leg platform 10 by securing locking devices 82, 84, 86, each locking device being configured to lock off the respective tethers 32, 34, 36 with respect to the buoyant platform such that each tether is held at a constant length. In the example illustrated in Figure 6D, the locking devices 82, 84, 86 comprise a series of clamps. However, in an alternative example, the at least one locking device may be a component of the winch, or winches 26, 27, 28 such that the tethers 32, 34, 36 are locked off by securing the winches 26, 27, 28, although it shall be appreciated that any other suitable alternative may be used.

Finally, once the tethers 32, 34, 36 have been "locked off", the fluid contained within the bulkheads 25a-i, see Figure 2 is jettisoned via the respective outlets of the platform 20 to increase the buoyancy of the platform 20, as is shown in Figure 6E. This causes the platform 20 to return to a second pre-determined level corresponding to a desired tension in each of the tethers 32, 34, 36. Furthermore, the winches 26, 27, 28 of the platform 20 can also be used to further adjust the length of each of the tethers 32, 34, 36 between the platform 20 and the foundation piles 42, 44, 46 to further tailor the tension of each of the tethers 32, 34, 36, although it shall be appreciated that this step may not be necessary in all cases and therefore may be omitted. Once the desired tension in each of the tethers 32, 34, 36 has been obtained, the installation of the tension leg platform 10 is complete.

It should also be noted that whilst the buoyancy of the platform 20 is described in the Figures as being decreased via ballasting the platform, alternatively the platform could be submerged to a desired level solely via winding the winches 26, 27, 28 to reduce the length of each tether prior to lock off. Following lock off, the natural buoyancy of the platform 20 can then be used to float the platform back up to the second pre-determined level thereby enabling installation of the tension leg platform 10 without the need for any ballasting. This removes the need for specific bulkheads within the platform 20 and hence enables more simple construction of the platform 20.

By using the plurality of tethers 32, 34, 36 both as a hauling means to lower the foundation piles 42, 44, 46 and also as the tension legs of the tension leg platform 10, the present invention is able to greatly improve off-shore wind turbine installation times as specialised lifting vessels are no longer required for installation of the foundation piles 42, 44, 46.

Following the installation of the tension leg platform 10, a remotely operated vehicle (ROV) or other inspection method can be used to ensure the structural integrity of the tension leg platform 10. Once the tension leg platform 10 has been installed, a wind turbine 2, as illustrated in Figure 1, can be installed onto the upper surface 22 of the tension leg platform 10. However, in an alternative example, a platform 20 may be chosen having a buoyancy equal to or greater than the combined weight of the platform 20, the plurality of tethers 32, 34, 36, the plurality of foundation piles 42, 44, 46, the locking device 82, 84, 86 and the wind turbine 2, in which case the wind turbine may be installed onto the tension leg platform 10 on-shore, and may then be towed out to the installation site along with the tension leg platform 10 via the tug 56 thereby further reducing installation times.

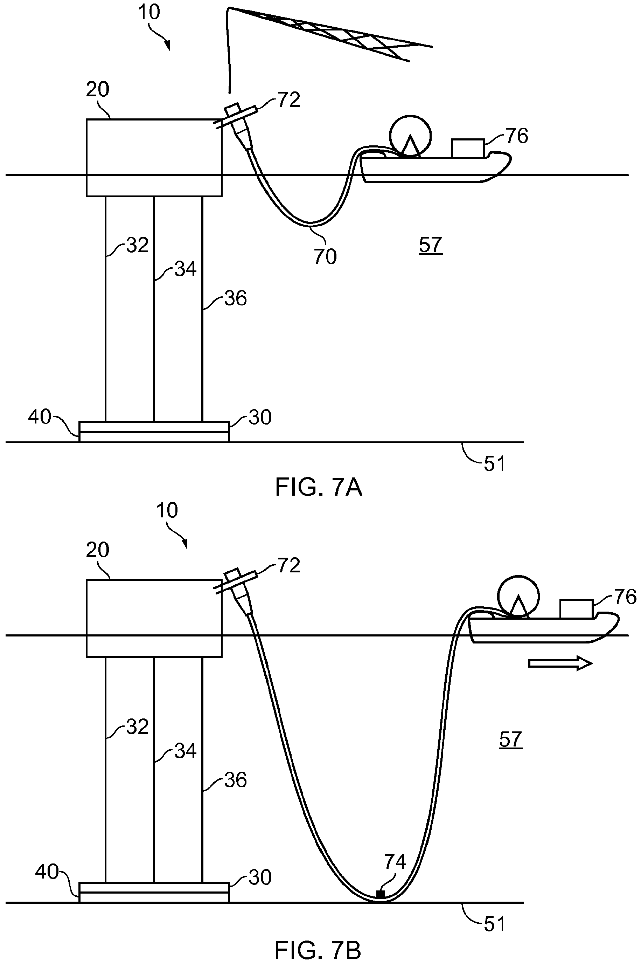

Finally, an electrical power cable 70 is attached to a cable installation 72, typically in the form of a cable riser, located on the platform 20 using a specifically adapted vessel 76 as illustrated in Figure 7A. The vessel 76 is configured to lay out the electrical power cable 70 away from the tension leg platform 10 as a free hanging catenary as is shown in Figure 7B. The electrical power cable 70 may connect the wind turbine installation 1 to another locally situated wind turbine installation, or alternatively, may connect the wind turbine installation 1 to an electrical sub-station. Once the electrical power cable 70 has been fully installed as a free hanging catenary, the electrical power cable 70 can be secured to the floor 51 of the body of water 57 using any suitable securing means 74 to help prevent snagging of the electrical power cable 70 by trawlers or the like, which can lead to lengthy maintenance times.

Since tension leg platforms significantly reduce vertical and horizontal movements experienced by the platform 20 compared with other known off-shore floating platforms, this enables the use of free hanging catenary cables with the tension leg platform 10 of the illustrated examples. Free hanging catenaries are cheap and simple to install and therefore this provision provides a further improvement to installation times.

Furthermore, since tension leg platforms, such as the platform of the present invention, are able to reduce vertical moments experienced by the platform 20, less "slack" is required in the electrical power cable 70 to account for such vertical moments. This enables a greater length of the cable to be secured to the floor 51 of the body of water 57 which helps to further reduce the risk of snagging.

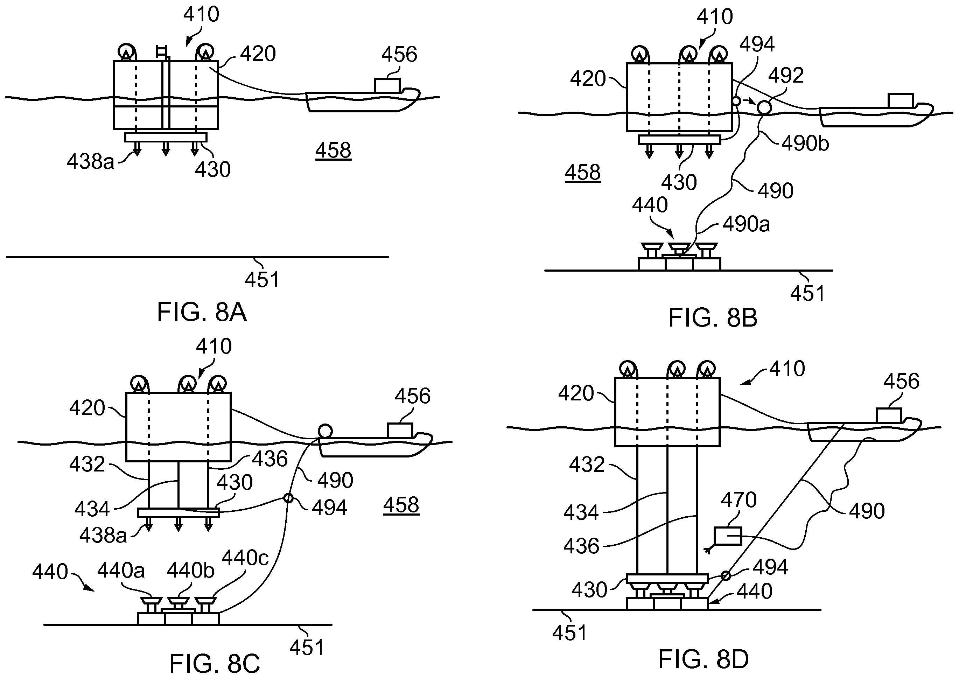

An alternative method of installing and securing the plurality of tethers and a connector 30 into the floor of a body of water shall now be described with reference to Figure 8.

Whilst the previously described method is suitable for examples both with a connector 30 or with a tether directly coupled to the foundation pile (i.e. the connector 30 being omitted), the following method shall be described solely with reference to a tension leg platform 410 having a connector 430. Like reference numerals denote like parts with Figures 1 to 6 and only the differences shall be described here.

Once the tension leg platform 410 has been assembled into its pre-installation configuration, as is set out in Figure 5, it can be attached to a tug 456, or any other suitable propelled hauling vessel, for towing across a body of water 458 to the desired installation site, as shown in Figure 8A. However, the foundation piles 440 in this instance are not attached to the connector 430 but are instead pre-installed within the floor 451 of the body of water 458 in a pre-determined configuration, matching that of the attachment device 438a of the connector 430, which helps to enable the tethers 432, 434, 436 to be attached to the foundation piles 440 quickly without having to account for varying tolerances between the foundation piles 440 and attachment device 438a.

The foundation piles 440 further comprise a surface line 490 having a first end 490a attached to the foundation piles 440 and a second end 490b having a floatation device 492 attached thereto, as shown in Figure 8B. Similarly to the floatation devices 31a-c described in Figure 5, the floatation device 492 floats the second end 490b of the surface line 490 to the surface of the body of water 458 to allow for easy location and uptake.

The connector 430 also comprises a guide. The guide may for example be in the form of a guide loop 494, configured to receive the surface line 490. The guide may be configured to align the connector with the foundation pile. The surface line 490 is threaded through the guide loop 494 so as the connector 430 is lowered towards the foundation piles 440, the guide loop 494 runs down the surface line 490, as shown in Figure 8C, to help ensure the connector 430 is aligned with the foundation piles 440 once it reaches the floor 451 of the body of water 458, thereby helping to reduce installation time which may otherwise be spent properly aligning the connector 430 with the pre-installed foundation piles 440.

The attachment device 438a is configured to interlock with respective recesses 440a-c of the foundation piles 440. Once the attachment device 438a of the connector 430 is interlocked with the recesses 440 a-c of the foundation piles 440, the surface line 490 can be decoupled from the guide loop 494 to be recovered by the tug 456. The connector 430 can then be permanently secured to the foundation piles 440 and inspected using an ROV 470, although it shall be appreciated that other suitable methods may be used.

Once the tethers 432, 434, 436 have been secured to the foundation piles 440, the tension leg platform 410 can be locked off and tensioned in the way as has been described previously with reference to Figures 6A-E to complete the installation operation.

The provision of a connector 430 having a first side attachable to the buoyant platform 420 and a second side which can be coupled to a pre-installed foundation 440 provides the advantage of enabling the tension leg platform 410 to be decoupled from the foundation 440 via disconnecting the attachment device 438a from the respective recesses 440a-c of the foundation piles 440. This enables the tension leg platform 410 to be moved between locations, for example to another wind resource location thereby avoiding the costs of scrapping the existing tension leg platform and manufacturing a new one, or alternatively to an on-shore location for maintenance, thereby reducing maintenance costs.

Although the invention has been described above with reference to one or more preferred embodiments, it will be appreciated that various changes or modifications may be made without departing from the scope of the invention as defined in the appended claims.

## Claims

1. A tension leg platform (10) comprising:
a buoyant platform (20);
at least one tether (32, 34, 36) attached to the buoyant platform (20);
at least one foundation pile (42, 44, 46) attached to the at least one tether (32, 34, 36); and
at least one locking device (82, 84, 86) configured to lock off the at least one tether (32, 34, 36) with respect to the buoyant platform (20),
wherein the buoyant platform (20) is configured to cause paying out of the at least one tether (32, 34, 36) so as to lower the at least one foundation pile (42, 44, 46) attached thereto from a first position proximal to the buoyant platform (20) to a second position in which the at least one foundation pile (42, 44, 46) can be installed into the floor (51) of a body of water (57).

2. The tension leg platform (1) of claim 1, wherein the at least one foundation pile (42, 44, 46) is a suction pile, preferably the at least one foundation pile (42, 44, 46) is a plurality of foundation piles (42, 44, 46), more preferably, the plurality of foundation piles (42, 44, 46) is a connected cluster of piles.

3. The tension leg platform (10) according to any preceding claims, wherein the at least one tether (32, 34, 36) is a plurality of tethers, and the tension leg platform (10) further comprising a connector (30) configured to connect the plurality of tethers to the at least one foundation pile (42, 44, 46) or to the buoyant platform (20), such that the at least one foundation pile (42, 44, 46) is attached to the plurality of tethers via the connector (30).

4. The tension leg platform (10) of any preceding claim, further comprising a cable installation (72) for connection to an electrical power cable (70), preferably the cable installation (72) is arranged such that the electrical power cable (70) is a free hanging catenary.

5. The tension leg platform (10) according to any preceding claim, wherein the buoyant platform (20) has variable buoyancy.

6. The tension leg platform (10) according to any preceding claim, wherein the buoyant platform (20) has at least one winch (26, 27, 28) associated with the at least one tether (32, 34, 36), wherein winding of the winch (26, 27, 28) causes the paying out, and reeling in, of the at least one tether (32, 34, 36).

7. The tension leg platform (10) according to any preceding claim, wherein the at least one foundation pile (42, 44, 46) is a suction pile and further comprising a suction pump (60) configured to be raised and lowered from the buoyant platform (20) and for coupling to the suction pile.

8. The tension leg platform (10) according to any preceding claim suitable for supporting a wind turbine (2).

9. A wind turbine (2) attached to a tension leg platform (10) according to any preceding claim.

10. A method of installing a tension leg platform (10) comprising the steps of:
providing a buoyant platform (20) having at least one tether (32, 34, 36) attached to the buoyant platform (20), and at least one foundation pile (42, 44, 46) attached to the at least one tether (32, 34, 36);
paying out the at least one tether (32, 34, 36) from the buoyant platform (20) so as to lower the at least one foundation pile (42, 44, 46) from a first position proximal to the buoyant platform (20) to a second position adjacent the floor (51) of a body of water (57);
installing the at least one foundation pile (42, 44, 46) into the floor (51) of the body of water (57); and
locking off the at least one tether (32, 34, 36) with respect to the buoyant platform (20) to provide a tension leg of the tension leg platform (10).

11. The method of installing a tension leg platform (10) according to claim 10, wherein the step of locking off the at least one tether (32, 34, 36) comprises:
decreasing the buoyancy of the buoyant platform (20) to a first pre-determined level corresponding to a desired height of the buoyant platform (20) in the body of water (57);
locking off the at least one tether (32, 34, 36); and
increasing the buoyancy of the buoyant platform (20) to a second pre-determined level corresponding to a desired tension in the at least one tether (32, 34, 36).

12. The method of installing a tension leg platform (10) according to claim 10 or 11, wherein the buoyant platform (20) is further configured to adjust the length of the at least one tether (32, 34, 36) between the buoyant platform (20) and the at least one foundation pile (42, 44, 46).

13. The method of installing a tension leg platform (10) according to claim 10, 11 or 12, wherein the at least one foundation pile (42, 44, 46) is a suction pile, the method further comprising:
lowering a suction pump (60) from the buoyant platform (20) to couple with the suction pile and actuating the suction pump (60) to embed the suction pile into the floor (51) of the body of water (57); and
decoupling the suction pump (60) from the suction pile and recovering the suction pump (60) to the buoyant platform (20).

14. The method of installing a tension leg platform (10) according to any of claims 10 to 13, the method further comprising:
towing the tension leg platform (10) across the body of water (57) to an installation site using a propelling vessel (56).

15. The method of installing a tension leg platform (10) according to claim 14, the method further comprising installing a wind turbine (2) onto the tension leg platform (10) prior to, or after, towing the tension leg platform (10) to the installation site.
